# EUROPÄISCHE PATENTSCHRIFT

(11) **EP 0 977 417 B1**
(45) Veröffentlichungstag und Bekanntmachung des Hinweises auf die Patenterteilung: **23.11.2005**
(21) Anmeldenummer: 99111306.9
(22) Anmeldetag: 10.06.1999
(51) Int. Cl.: H04M 11/04

(54) **Rechnergestütztes Überwachungs- und Notrufverfahren**
Computer supported monitoring and emergency call method
Méthode assistée par ordinateur pour supervision et appel d'urgence

(30) Priorität: 30.07.1998 DE 19834403
(43) Veröffentlichungstag der Anmeldung: 02.02.2000
(73) Patentinhaber: E-Plus Mobilfunk GmbH & Co. KG, 12349 Berlin (DE)
(72) Erfinder: Gadsdon, Stephen Brian, 27283 Verden (Aller) (DE)
(74) Vertreter: Beyer, Rudi

(56) Entgegenhaltungen:
- GB-A- 2 298 994
- US-A- 4 524 243

## Beschreibung

Die Erfindung betrifft ein rechnergestütztes Überwachungs- und Notrufverfahren für Menschen unter Verwendung von Telekommunikation.

Durch unterschiedliche Motivationen kann bei Einzelpersonen sowohl im privaten als auch insbesondere im gewerblichen Umfeld die Notwendigkeit oder der Wunsch nach einer Überwachung sowie eines im Bedarfsfall automatisch ausgelösten Notfallplanes entstehen. Hierbei kann es sich beispielsweise um folgende Situationen handeln:
a) Arbeiten in gefährdeten Bereichen, z. B. auf Dächern
b) Aufenthalt in schwierigem oder unübersichtlichem Gelände, z. B. im Gebirge
c) Verlassen des Krankenhauses nach ambulanten Operationen
d) Aufenthalt von aufsichts- oder pflegebedürftigen Personen außerhalb des gewöhnlichen Umfeldes (z. B. Kinder oder ältere Menschen)

Im einzelnen:

Bei Arbeiten in gefährdeten Bereichen, zum Beispiel auf Dächern, werden in der Regel zwei Arbeiter eingesetzt, damit nach gesetzlicher Forderung in einem Notfall Rettungsmaßnahmen von der zweiten Person eingeleitet werden können. Typische Arbeiten im Bereich des Mobilfunkes sind zum Beispiel Arbeiten an Richtfunkeinrichtungen oder an Antennen.

Die zweite Person stellt somit nur eine Sicherung der mit den eigentlichen Arbeiten betrauten Person dar, was entsprechende Kosten verursacht.

Zahlreiche Wartungsarbeiten, zum Beispiel auf Dachstandorten, finden in nicht gefährdeten Bereichen statt, so dass oftmals nur eine Person zu solchen Arbeiten fährt. Hierbei kann es allerdings geschehen, dass die betreffende Person vor Ort feststellt, dass sie in einem gefährdeten, zum Beispiel absturzgefährdeten Bereich, arbeiten muss. Diese Person muss dann erst einen Kollegen anfordern, um diese Arbeiten durchführen zu können.

Manche Freizeitaktivitäten, wie z. B. Bergwandern erfordern in der Regel die Durchführung in der Gruppe, um im Notfall entsprechende Alarmierungen vornehmen zu können. In Zeiten eines wachsenden Individualitätsanspruches sind aber einige dieser Tätigkeiten ohne eine Überwachung für Notfälle nicht verantwortungsbewußt alleine ausübbar.

In Fällen von operativen medizinischen Behandlungen muss häufig eine Abwägung zwischen Kostenreduktion (z. B. durch frühzeitige Entlassung aus dem Krankenhaus) und ärztlicher Sorgfaltspflicht (z. B. längere post-operative Beobachtung im Krankenhaus) getroffen werden. Durch die Möglichkeit einer automatischen Überwachung von Patienten ist es in einigen Fällen möglich, den Patienten das Verlassen des Krankenhauses (gleich ob aus Gründen der Kostenreduktion oder um entsprechenden Wünschen des Patienten zu entsprechen) unter gleichzeitiger Wahrung der medizinischen Sorgfaltspflicht zu ermöglichen.

Vor dem Hintergrund eines wachsenden Sicherheitsbedürfnisses kann es beispielsweise wünschenswert sein, Kinder beim Aufenthalt außer Haus zu überwachen, um im Falle eines Notfalles kurzfristig reagieren zu können.

Durch die GB-A 2 298 994 ist ein rechnergestütztes Überwachungs- und Notrufverfahren für Menschen gemäß der vorausgesetzten Gattung vorbekannt. Dieses Verfahren arbeitet mit einem entfernt angeordneten Überwachungssystem, das eine Telefoneinrichtung umfasst, mit einem Signalempfangsapparat, der in der Lage ist, wenigsten einen Telefonanruf von einem Telefonapparat zu detektieren, um irgendeine Aktivität in einer bestimmten Region, die zu der Telefoneinrichtung gehört, festzustellen. Bei der Einrichtung wird der Telefonanruf über eine Signalleitung automatisch zur Generierung eines Signals verarbeitet, wodurch das Ausgangssignal und die Nummer, die dazu gehört, festgestellt werden kann. Festgestellt werden kann auch die Zeit, zu welcher der betreffende Telefonanruf übermittelt wurde. Die Einrichtung umfasst auch einen Datenspeicher, der in der Lage ist, die Ausgangstelefonnummem und/oder die Zeiten, zu der der betreffende Telefonanruf durchgeführt worden ist, zu speichern. Der Anruf kann entweder durch eine Bedienperson oder durch eine gesprochene Ansage beantwortet werden. Des weiteren umfasst das System einen Telefonapparat, der in der Lage ist, die Nummer des Anrufers elektronisch zu überwachen oder anzuzeigen oder auf sonstige Weise sichtbar zu machen sowie die Nummer des Anrufers aufzuzeichnen. Es können auch mehrere Anrufer gleichzeitig in der entsprechenden Art und Weise detektiert, beobachtet und aufgezeichnet werden. Der Empfangsapparat des Systems kann an einer zentralen Stelle angeordnet sein, die in der Lage ist, Nummern von verschiedenen Ausgangsapparaten zu überwachen und aufzuzeichnen. Der Datenspeicher kann ein oder mehreren Notfalltelefonnummem speichern, die automatisch mit den Nummern der Anrufer verbunden werden können. Dadurch ist auch die Auslösung eines Alarmsignals möglich.

Der Erfindung liegt die Aufgabe zugrunde, ein Überwachungs- und Notrufverfahren für Menschen zu schaffen, das es zu überwachenden Personen ermöglicht, selbständig eine Überwachung zu veranlassen und sodann automatisch die Überwachung übernimmt und im Bedarfsfalle die erforderlichen NotfallMaßnahmen auslöst, andererseits den Aufwand und damit die Kosten bei der individuellen Überwachung minimiert.

### Lösung

Die Aufgabe wird durch die in **Patentanspruch 1** wiedergegebenen Merkmale gelöst.

Das erfindungsgemäße Überwachungs- und Notrufverfahren arbeitet rechnergestützt und damit unabhängig von der Sorgfalt etwaiger Mitarbeiter. Demgemäß kann beispielsweise auch in gefährdeten Bereichen nur eine Person eingesetzt werden, während bisher zwei Personen erforderlich waren, da die zweite Person durch das erfindungsgemäße rechnergestützte Überwachungs- und Notrufverfahren ersetzt wird, das aber nicht nur eine in einem gefährdeten Bereich arbeitende Person, sondern praktisch eine beliebige Anzahl von in gefährdeten Bereichen arbeitende Mitarbeiter überwachen kann.

Gleichermaßen kann bei einer nicht-gewerblichen Nutzung des Systems ein Anwender seine Überwachung veranlassen und sich somit auch alleine in gefährliche oder unübersichtliche Gebiete, z. B. Gebirge oder Wälder, begeben, und gleichzeitig entsprechenden Sicherheitswünschen Rechnung tragen.

Die zu überwachende Person, nachfolgend "Anwender" genannt, ruft zu Beginn der gewünschten Überwachung das betreffende System durch Wählen einer vorbestimmten Nummer mittels Telefon, z. B. Mobiltelefon, an. Das System speichert je nach Konfiguration automatisch die Telefonnummer des betreffenden Anwenders oder fordert ihn zur Eingabe seiner Nummer auf, legt dann auf (unterbricht die Verbindung) und ruft nach einer vorbestimmten Zeitspanne (zum Beispiel nach 30 Sekunden) den Anwender zurück.

Erfolgt eine persönliche Anmeldung gemäß Merkmal c), so sieht das Verfahren folgende Möglichkeiten vor:
1. Die die Anmeldung entgegennehmende Person gibt die Daten in das System ein, das dann die weitere automatische Überwachung übernimmt.
2. Die die Anmeldung entgegennehmende Person überwacht analog dem im System festgelegten Ablauf die angemeldete Person.
3. Die Anmeldung wird abgelehnt.

Je nach Anwendung kann es sinnvoll sein, dem Anwender bei der Anmeldung seiner Überwachung einen Code zu seiner weiteren Identifizierung zuzuweisen und entsprechend anzusagen.

Der Anwender bestätigt den Rückruf des Überwachungssystems durch Annahme des Anrufes. Hierbei kann die Sicherheit bei Bedarf durch zusätzliches Drücken einer Taste (z. B. '#') oder durch Eingabe eines zuvor vereinbarten Codes erfolgen.

Die Eingabe eines zuvor festgelegten Codes ist im weiteren dann sinnvoll, wenn die Überwachung über ein frei zugängliches Telefon und nicht durch beispielsweise ein persönliches Mobiltelefon erfolgt.

Nach erfolgreicher Anmeldung und entsprechender Bestätigung wird der Anwender in einem bestimmten Zeittakt, zum Beispiel im Fünf-Minuten-Takt, vom System angerufen.

Der Anwender muss diese vom System erfolgenden Anrufe immer durch Annahme des Rufes sowie ggf. zusätzliches Drücken einer Taste oder eines zuvor festgelegten Codes bestätigen.

Bestätigt der Anwender einen Anruf nicht, erfolgt innerhalb einer vorher im System festgelegten (programmierten) Zeitspanne ein erneuter Anruf, zum Beispiel nach 60 Sekunden.

Bestätigt der Anwender auch diesen Anruf des Systems nicht, benachrichtigt das System automatisch eine festgelegte Notfallstelle, beispielsweise in dem es dort ein Nottelefon anruft.

Die Notfallstelle bestätigt den Notruf an das System und versucht nun seinerseits, den Anwender telefonisch zu erreichen.

Gelingt dies nicht, wird automatisch ein Notfallplan aktiviert und Notfallmaßnahmen eingeleitet.

Dieser Notfallplan wird vorher festgelegt und läuft dann entsprechend der Vorgaben ab.

Irrtümer oder Verstreichenlassen zu langer Zeitspannen sind dadurch ausgeschlossen.

Das rechnergestützte Überwachungs- und Notrufverfahren gemäß der Erfindung kann aber außer in zum Beispiel absturzgefährdeten Bereichen bei der Wartung von Technik in gefährdeten Bereichen, beispielsweise auf Dächern oder Masten, auch zum Beispiel bei Wach- und Schließgesellschaften, eingesetzt werden, da hier die Personen ebenfalls gefährdet sind, zum Beispiel beim Begehen von einbruchgefährdeten Bereichen.

Weitere vorteilhafte Verfahrensweisen sind in **Patentanspruch 2** beschrieben.

Gemäß **Patentanspruch 3** übergibt ein (originäres) Überwachungssystem bei Bedarf, zum Beispiel zur räumlichen Verlagerung der Überwachung, bei Wartungsarbeiten oder dergleichen, seine Tätigkeit an ein weiteres Überwachungssystem.

Das weitere Überwachungssystem arbeitet dabei gleichsam rechnergestützt und unabhängig von der Sorgfalt eingesetzter Menschen, so dass das erfindungsgemäße Überwachungs- und Notfallverfahren nicht durch die Übergabe an das weitere Überwachungssystem beeinträchtigt oder dieses automatisch arbeitende System gar abgeschaltet wird. Vielmehr wird die rechnergestützte automatisch arbeitende Überwachung und Notfall-Behandlung nur auf ein weiteres Überwachungssystem übertragen.

Bei der Übertragung meldet sich das originäre Überwachungssystem bei dem entsprechenden weiteren Überwachungssystem und überträgt insbesondere folgende Informationen:
- Angemeldete Anwender durch Übertragung der Liste der Überwachungseinträge. Die entsprechenden Einträge werden dann aus dem originären Überwachungssystem entfernt.
- Die Liste der für das originäre Überwachungssystem zulässigen (Anwender-) Telefonnummern.

Das weitere Überwachungssystem verwendet die Daten wie folgt:
- Die angemeldeten Anwender werden in die Liste der Überwachungseinträge des weiteren Überwachungssystems eingefügt.
- Das Telefonbuch des originären Überwachungssystems wird mit einem entsprechendem Verweis in das Telefonbuch des weiteren Überwachungssystems kopiert.
- Auf Aufforderung des originären Überwachungssystems oder nach Ablauf der Zeitspanne, für die das weitere Überwachungssystem zuständig ist (zum Beispiel Beendigung der Nachtarbeit; Ablauf eines Wochenendes; Verstreichen eines Feiertags), übergibt das weitere Überwachungssystem wiederum seine Daten an das originäre Überwachungssystem, das dann nahtlos und automatisch die rechnergestützte Überwachungstätigkeit fortsetzt.

Eine vorteilhafte Ausführungsform beschreibt **Patentanspruch 4**.

Gemäß **Patentanspruch 5** ist mindestens ein weiteres, von den eigentlichen Überwachungssystemen unabhängiges (Kontroll-) System vorhanden. Das Kontrollsystem überwacht das Überwachungssystem, um im Falle eines Ausfalles des Überwachungssystems weiterhin zu gewährleisten, dass die Sicherheit gegeben ist. Zum Beispiel könnte der Rechner im ersten System ausfallen, so dass keine Überwachung mehr gegeben ist. Das automatisch arbeitende, unabhängige (Kontroll-) System löst dann sofort und verzögerungsfrei Alarm aus. Dieser Alarm stellt sicher, dass das erste System sofort überprüft wird, um festzustellen, welche Maßnahmen ergriffen werden müssen.

Um die Sicherheit der überwachenden Personen auch über den Ausfall eines Überwachungssystems hinaus sicherstellen zu können, werden die für jeden Überwachungseintrag wesentlichen Daten laufend auf das Kontrollsystem übertragen und dort in Kopie gespeichert. So ist sichergestellt, dass auch im Ausfall eines Überwachungssystems die gerade überwachten Personen bekannt sind.

Die zu überwachende Person, zum Beispiel bei einer Wach- und Schließgesellschaft, wird also durch das Überwachungs- und das Kontrollsystem ständig und nahtlos und automatisch rechnergestützt überwacht.

In **Patentanspruch 6** ist eine bevorzugte Ausführungsform der Erfindung beschrieben.

Zur Durchführung des Verfahrens kann zum Beispiel folgende Hardware zur Anwendung kommen:
- IBM-kompatibler PC (z. B. 486/33,8 MB RAM) oder vergleichbarer Rechner
- ca. 10 MB freier Festplattenspeicher
- ISDN-fähiges Data Voice Modem, z. B. Zyxel-2864 ID
- ISDN S0 Telefonanschluß mit zwei Telefonnummern
- Telefonamts- oder Nebenstellenleitung

In Betracht kommen somit übliche mobile Telefone und Telefonnetze, die im Bedarfsfalle auch mit Festnetzen zusammenarbeiten können. Die in Betracht kommenden Personen (Privatpersonen bzw. Instandhalter, Wachmänner oder dergleichen) brauchen idealerweise lediglich mit einem geeigneten Mobiltelefon ausgerüstet zu werden.

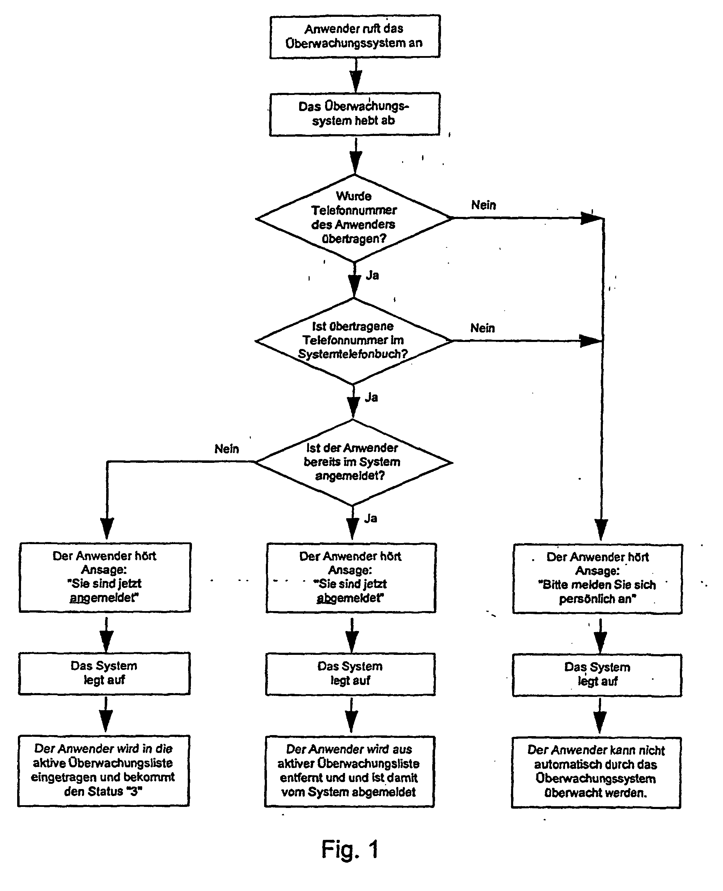

In der Zeichnung ist die Erfindung beispielsweise veranschaulicht. Es zeigen
- Fig. 1: Anruf des Anwenders; automatische Erkennung der Rückrufnummer;

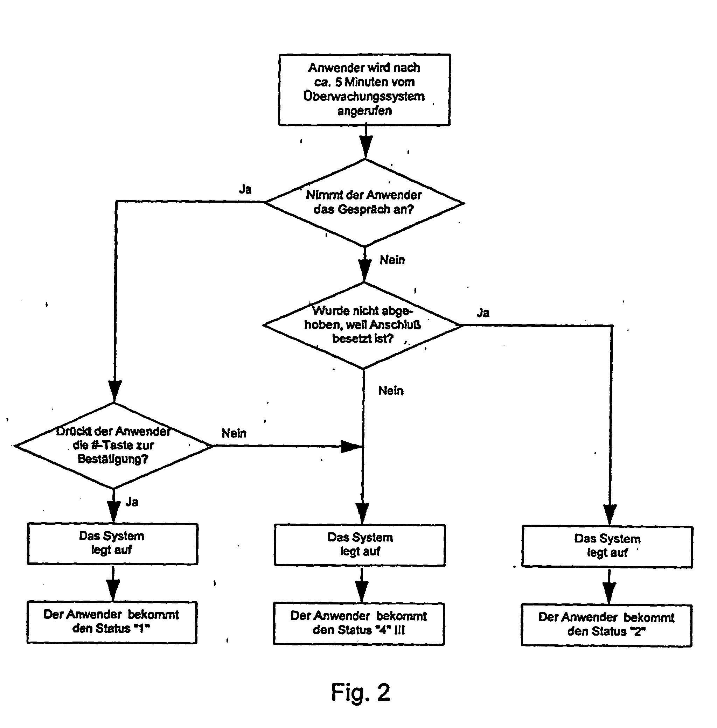

- Fig. 2: Anwender im Status "1" ("normale Überwachung");

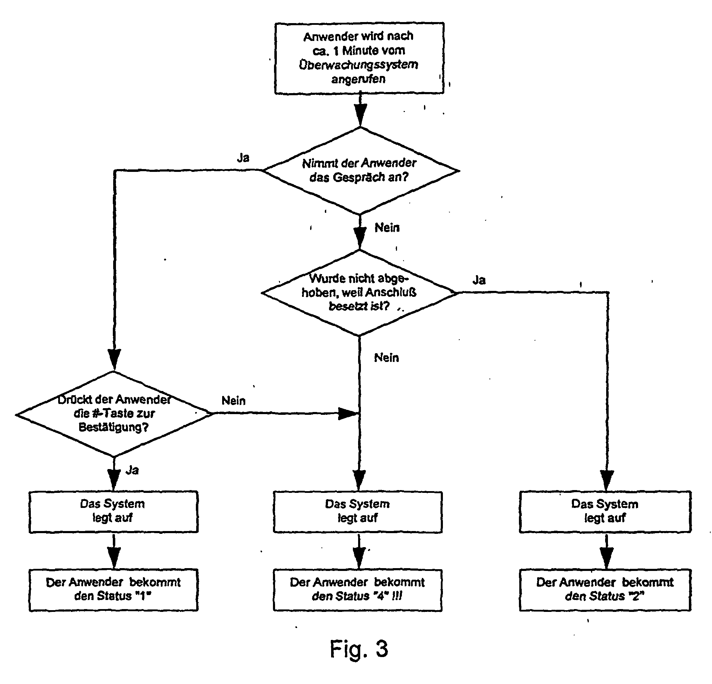

- Fig. 3: Anwender im Status "2" ("kurzfristiger Rückruf wg. Besetzt");

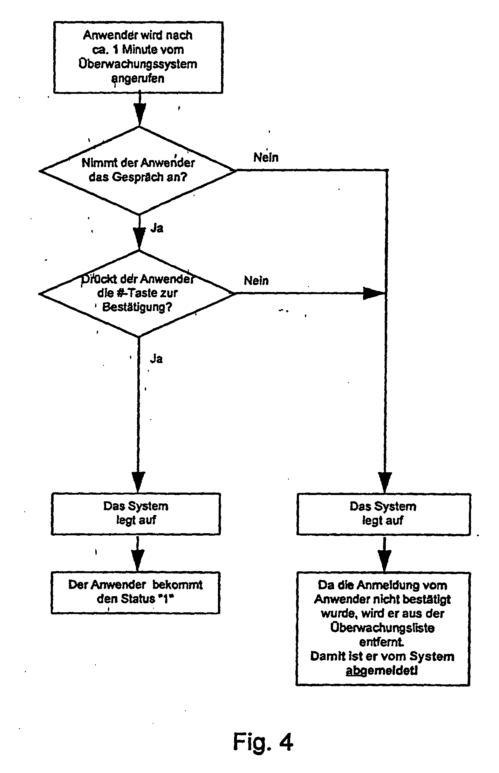

- Fig. 4: Anwender im Status "3" ("Anmeldung muss bestätigt werden") und

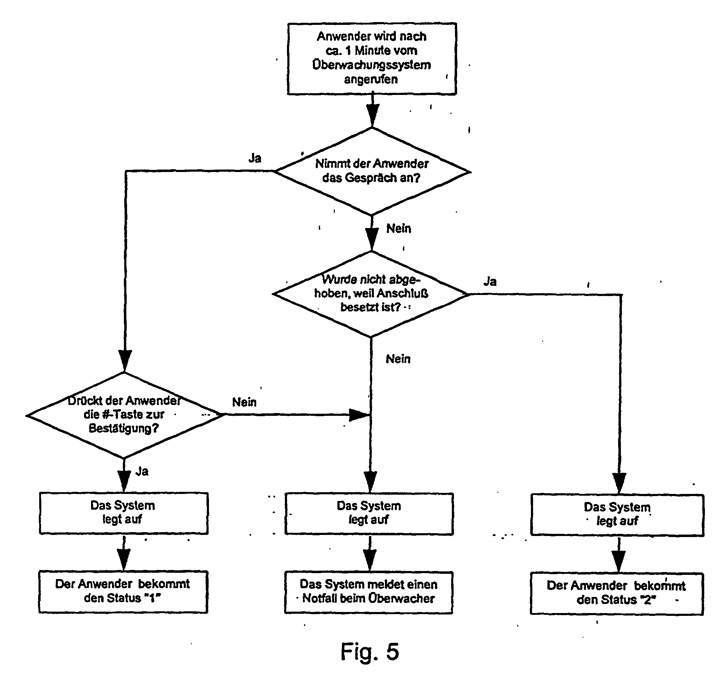

- Fig. 5: Anwender im Status "4" ("potentieller Notfall").

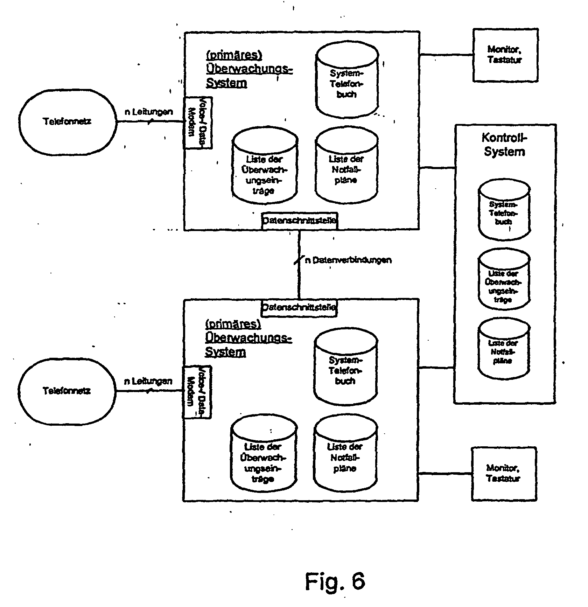

- Fig. 6: Die Zusammenschaltung von Überwachungs- und Kontrollsystemen.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Rechnergestütztes Überwachungs- und Notrufverfahren für Menschen unter Verwendung von Telekommunikation, insbesondere Mobilfunk, bei welchem eine Teilnehmemummer des jeweilig zu überwachenden und/oder gefährdeten Anwenders überwacht wird, **dadurch gekennzeichnet, dass** der Anwender
a) zu Beginn einer gewünschten Überwachung eine vorher festgelegte Teilnehmernummer eines automatischen Überwachungssystems anruft;
b) die übertragene Telefonnummer des Anwenders mit einer auf dem Überwachungssystem vorgehaltenen Liste von erlaubten Telefonnummern verglichen und im Erfolgsfall als Rückrufnummer im Überwachungssystem automatisch gespeichert wird;
c) sofern die Telefonnummer des Anwenders nicht übertragen wurde oder nicht in der Liste eingetragen ist, der Anwender aufgefordert wird, sich unter einer weiteren Zielrufnummer bei einem Überwacher persönlich anzumelden;
d) das Überwachungssystem den Anwender nach Verstreichen einer vorbestimmten Zeitspanne automatisch zurückruft und bestätigt **dadurch** dem Anwender seine Anmeldung in dem Überwachungssystem;
e) der Anwender durch Annahme dieses Anmeldebestätigungsrufes bzw. durch zusätzliche Eingabe eines entsprechenden Codes die Anmeldung seinerseits bestätigt und damit im Überwachungssystem als formell angemeldet gilt;
f) das Überwachungssystem ruft den Anwender unter Verwendung der automatisch oder manuell definierten Rückrufnummer in vorbestimmten Zeitspannen automatisch an, wobei der Anwender durch einen vorbestimmten Code, insbesondere durch Tastendruck, den Anruf auf seinem Telefon bestätigt;
g) erfolgt keine Bestätigung durch den Anwender, so löst das Überwachungssystem automatisch einen vorbestimmten Notfallplan aus;
h) der aktivierte Notfallplan informiert, beispielsweise durch Anruf dafür vorbestimmte Personen, die wenigstens einen Telefonkontakt zu dem Anwender über die gespeicherte Rückrufnummer unternehmen;
i) meldet sich abermals der Anwender nicht, werden die durch den Notfallplan vorbestimmten Notfallmaßnahmen unverzüglich eingeleitet;
j) erfolgt kein Notfall, so meldet sich der Anwender nach Beendigung des gewünschten Überwachungzeitraumes - nach Verlassen eines gefährdeten Bereiches - durch Anruf bei dem Überwachungssystem, unter Benutzung eines vorher festgelegten Codes, ab;
k) das Überwachungssystem löscht automatisch die identifizierte und überwachte Nummer.

2. Verfahren nach Anspruch 1, **dadurch gekennzeichnet, daß** folgende Modifikationen einzeln oder in Kombination Anwendung finden:
a) wird die Telefonnummer des Anwenders nicht übertragen, oder ist die übertragene Nummer nicht in der Liste des Überwachungssystems eingetragen, oder wünscht der Anwender trotz Anruf von einer zulässigen Telefonnummer den Rückruf unter einer anderen Telefonnummer, so kann er eine frei wählbare Telefonnummer als Rückrufnummer, zum Beispiel über die Tastatur seines Telefons, eingeben;
b) bei der Anmeldung im Überwachungssystem kann der Anwender eine Sprachnachricht hinterlassen, die je nach Anwendung z. B. den Aufenthaltsort des Anwenders, die Art seiner Tätigkeit oder Hinweise für Aktionen in einem eventuellen Notfall enthält, wobei diese Nachricht automatisch im Überwachungssystem aufgezeichnet und gespeichert wird;
c) wurde vom Anwender bei der Anmeldung im System eine Sprachnachricht hinterlassen, so wird diese im Notfall der zu alarmierenden Person bzw. Stelle automatisch übermittelt;
d) der Anwender bekommt bei seiner Anmeldung einen ihn identifizierenden Code zugewiesen und angesagt, wobei er diesen Code bei weiteren Anrufen zum und/oder vom Überwachungssystem zur Bestätigung und/oder seiner Identifikation eingeben muss.

3. Verfahren nach Anspruch 1 oder 2, **dadurch gekennzeichnet, daß** ein originäres Überwachungssystem bei Bedarf seine Tätigkeit an ein ebenfalls automatisch arbeitendes weiteres, ebenfalls rechnergestütztes Überwachungssystem übergibt, das nach dem auch für das normalerweise zuständige Überwachungssystem arbeitenden Überwachungsplan arbeitet, wobei bei der Übertragung von dem originären Überwachungssystem an das weitere Überwachungssystem z. B. folgende Informationen ausgetauscht werden:
a) zu überwachender Anwender durch Übertragung der Überwachungseinträge, wobei die Daten nach der Übertragung auf das weitere Überwachungssystem aus der Liste der Überwachungseinträge des originären Überwachungssystems entfernt werden;
b) das weitere Überwachungssystem verwendet die Daten, indem es sie in seine Liste der Überwachungseinträge einfügt;
c) die Liste des originären Überwachungssystems wird gleichfalls vom originären auf das weitere Überwachungssystem übertragen und dort mit einer entsprechenden Kennzeichnung gespeichert;
d) je nach Konfiguration übergibt das weitere Überwachungssystem zu einem definierten Zeitpunkt oder nach Aufforderung durch das originäre Überwachungssystem die entsprechenden Daten wieder an das jeweilige originäre Überwachungssystem, welches dann nahtlos und automatisch die rechnergestützte Überwachungstätigkeit fortsetzt.

4. Verfahren nach Anspruch 3, **dadurch gekennzeichnet, dass** ein oder mehrere originäre Überwachungssysteme bei Bedarf die Überwachungseinträge an ein oder mehrere weitere Überwachungssysteme übergeben können.

5. Verfahren nach Anspruch 3 oder 4, **dadurch gekennzeichnet, daß** ein oder mehrere, sowohl von dem oder den originären als auch dem oder den weiteren Überwachungssystemen unabhängige, Kontrollsysteme vorhanden sind, welche
a) die originären und/oder weiteren Überwachungssysteme überwachen, um im Falle eines Ausfalles eines originären und/oder weiteren Überwachungssystems zu gewährleisten, daß die Sicherheit des Anwenders weiterhin gegeben ist;
b) sämtliche Überwachungseinträge der überwachten originären und/oder weiteren Überwachungssysteme aufzeichnen, so daß auch im Falle eines Totalausfalles eines originären oder weiteren Überwachungssystems die überwachten Anwender identifiziert werden können.

6. Verfahren nach Anspruch 1 oder einem der darauffolgenden Ansprüche, **gekennzeichnet durch** folgende Verfahrensweisen:
Anruf des Anwenders: Automatische Erkennung der Rückrufnummer;
Der Anwender das Überwachungssystem anruft, das Überwachungssystem die Verbindung herstellt, wobei für den Fall, dass die Telefonnummer des Anwenders übertragen wird, geprüft wird, ob die übertragene Telefonnummer im Systemtelefonbuch vermerkt ist und falls ja, geprüft wird, ob der Anwender bereits im System angemeldet ist, falls ja der Anwender eine Ansage hört "Sie sind jetzt abgemeldet" und anschließend das System auflegt und der Anwender aus der aktiven Überwachungsliste entfernt ist und damit vom System abgemeldet ist, oder der Anwender das Überwachungssystem anruft, das Überwachungssystem die Verbindung herstellt und im Falle dessen, dass die Telefonnummer nicht übertragen wird oder nach Übertragung nicht im Systemtelefonbuch vermerkt ist, der Anwender eine Ansage hört: "Bitte melden Sie sich persönlich an" und danach das System auflegt und der Anwender nicht automatisch **durch** das Überwachungssystem überwacht wird oder für den Fall, dass der Anwender nach dem Anrufen des Überwachungssystems und nach dem Übertragen seiner Telefonnummer und bei der Überprüfung, ob seine Telefonnummer im Systemtelefonbuch vermerkt ist, festgestellt wird, dass diese nicht darin vermerkt ist, der Anwender eine Ansage hört "Sie sind jetzt angemeldet", wonach das System auflegt und der Anwender in die aktive Überwachungsliste eingetragen ist und den Status "3" bekommt;
Anwender im Status "1" bei normaler Überwachung:
Der Anwender wird nach ca. fünf Minuten vom Überwachungssystem angerufen und für den Fall, dass der Anwender das Gespräch annimmt, der Anwender die #-Taste zur Bestätigung drückt und das System auflegt, wonach der Anwender den Status "1 bekommt oder für den Fall, dass der Anwender das Gespräch nicht annimmt, weil der Anschluss besetzt ist, das System auflegt und der Anwender den Status "2" bekommt oder der Anwender nicht die #-Taste drückt, das System legt auf und der Anwender den Status "4" erhält;
Anwender im Status "2" bei kurzfristigem Rückruf wegen Besetzt:
Der Anwender nach ca. einer Minute vom Überwachungssystem angerufen wird und für den Fall, dass der Anwender das Gespräch annimmt, der Anwender die #-Taste zur Bestätigung drückt, das System auflegt und der Anwender den Status "1" bekommt oder der Anwender das Gespräch nicht annimmt, weil der Anschluss besetzt ist, woraufhin das System auflegt und der Anwender den Status "2" bekommt oder der Anwender nicht die #-Taste drückt, das System legt auf und der Anwender den Status "4" erhält;
Anwender im Status "3" bei Anmeldung, für den Fall, dass die Anmeldung bestätigt werden muss:
Der Anwender nach ca. einer Minute vom Überwachungssystem angerufen wird und für den Fall, dass der Anwender das Gespräch annimmt, der Anwender die #-Taste zur Bestätigung drückt, woraufhin das System auflegt und der Anwender den Status "1" bekommt oder der Anwender entweder das Gespräch nicht annimmt oder die #-Taste nicht drückt, das System auflegt und die Anmeldung vom Anwender nicht bestätigt wurde, er aus der Überwachungsliste entfernt wird und damit vom System als abgemeldet gilt;
Anwender im Status "4" im potentiellen Notfall, wobei der Anwender nach ca. einer Minute vom Überwachungssystem angerufen wird und für den Fall, dass der Anwender das Gespräch annimmt und zur Bestätigung die #-Taste drückt, wonach das System auflegt und der Anwender den Status "1" erhält oder für den Fall, dass der Anwender das Gespräch nicht annimmt, weil der Anschluss besetzt ist, woraufhin das System auflegt und der Anwender den Status "2" bekommt oder der Anwender nicht die #-Taste drückt, das System auflegt und das System einen Notfall beim Überwacher meldet.

## Claims

1. Computer-supported monitoring and emergency call method for persons by means of telecommunication, particularly mobile telephony, where a subscriber number of the user to be monitored and/or at risk is monitored, **characterised in that**
a) at the beginning of a desired monitoring time the user calls a predetermined subscriber number of an automatic monitoring system;
b) the user's transmitted telephone number is checked against a list of permitted telephone numbers held on the monitoring system and, if accepted, is automatically stored as a call-back number in the monitoring system;
c) if the user's telephone number has not been transmitted or has not been entered on the list, the user is requested to register personally with a monitor under a further target number;
d) after a predetermined interval of time the monitoring system automatically calls the user back and thereby confirms to the user his registration in the monitoring system;
e) by accepting the registration confirmation call or by additionally entering an appropriate code the user confirms the registration and is thus regarded as formally registered on the monitoring system;
f) the monitoring system automatically calls the user at the automatically or manually defined call-back number at predetermined intervals of time and the user confirms the call on his telephone by means of a predetermined code, particularly by pressing a key;
g) if no confirmation is made by the user, the monitoring system activates a predetermined emergency plan;
h) the activated emergency plan informs, particularly by a telephone call, persons designated for this purpose, and these persons then contact the user at least once by telephone using the stored call-back number;
i) if the user still does not answer, emergency measures predetermined by the emergency plan are immediately initiated;
j) if no emergency occurs, the user after expiry of the desired monitoring time - after leaving an area of risk - deregisters by a call to the monitoring system using a predetermined code;
k) the automatic system automatically deletes the identified, monitored number.

2. Method in accordance with claim 1, **characterised in that** the following modifications are used individually or in combination:
a) if the user's telephone number is not transmitted, or if the transmitted number is not entered on the list of the monitoring system, or if despite a call from a reliable telephone number the user wishes to be called back at another telephone number, he can enter a freely selectable telephone number as a call-back number, for example, through the keyboard of his telephone.
b) when registering on the monitoring system, the user can leave a voice message which, depending on use, states e.g. the whereabouts of the user, his kind of activity or instruction for action to be taken in an emergency, this message being recorded and stored in the monitoring system;
c) if, when registering on the system, the user has left a voice message on the system, this message is in an emergency automatically passed on to the person or office to be alerted;
d) on reregistering the user is assigned and notified of a code identifying him and to be keyed in during further calls to and/or from the monitoring system for confirmation and/or his identification.

3. Method in accordance with claim 1 or 2, **characterised in that**, if required, an original monitoring system transfers its activity to a likewise automatically operating, further computer-supported monitoring system which operates according to the monitoring plan also operating for the monitoring system normally responsible, where during the transfer from the original monitoring system to the further monitoring system e.g. the following information is exchanged:
a) the user to be monitored, by transmission of the monitoring entries, where after transfer to the further monitoring system the data are removed from the list of monitoring entries on the original monitoring system;
b) the further monitoring system uses the data by entering them in its list of monitoring entries;
c) the list on the original monitoring system is likewise transferred from the original to the further monitoring system and there stored with an appropriate identification;
d) depending upon configuration, the further monitoring system at a defined time or on request by the original monitoring system transfers the data concerned back to the original monitoring system, which then uninterruptedly and automatically continues the computer-supported monitoring activity.

4. Method in accordance with claim 3, **characterised in that**, if required, one or more original monitoring systems can transfer the monitoring entries to one or more further monitoring systems.

5. Method in accordance with claim 3 and 4, **characterised in that** one or more checking systems are available which are independent of both the original or further monitoring system or systems and which
a) monitor the original and/or further monitoring systems in order to guarantee, if an original or further monitoring system fails, that the user's safety continues to be assured;
b) record all the monitoring entries of the monitored original and/or
further monitoring systems so that, even if an original or further monitoring system fails completely, the monitored users can be identified.

6. Method in accordance with claim 1 or any of the claims following it, **characterised by** the following procedures:
User's call: automatic recognition of the call-back number;
The user calls the monitoring system, the monitoring system makes the connection, and, if the user's telephone number is transmitted, a check is made of whether the transmitted telephone number is noted in the system telephone book and if it is, a check is made of whether the user is already registered in the system, and if he is, the user hears the message "You are now deregistered", and the system then ends the call and the user is removed from the active monitoring list and thus reregistered from the system, or the user calls the system, the monitoring system makes the connection and if the telephone number is not transmitted or after transmission is not noted in the system telephone book, the user hears the message "Please register personally" and afterwards the system ends the call and the user is not automatically monitored by the monitoring system or if after calling the monitoring system and after transmitting his telephone number and while checking whether his telephone number is noted in the system telephone book it is established that the number is not noted in it, the user hears the message "You are now registered", after which the system ends the call and the user is entered in the active monitoring list and receives status "3";
User in status "1" during normal monitoring:
The user is called by the monitoring system after about five minutes, and, if the user accepts the call, the user presses the # key to confirm and the system ends the call, after which the user receives status "1" or if the user does not accept the call, because the connection is engaged, the system ends the call and the user receives status "2" or the user does not press the # key, the system ends the call and the user receives status "4";
User in status "2" during short-term call-back because engaged:
The user is called by the monitoring system after about one minute and if the user accepts the call, the user presses the # key to confirm, the system ends the call and the user receives status "1" or the user does not accept the call, because the connection is engaged, whereupon the system ends the call and the user receives status "2" or the user does not press the # key, the system ends the call and the user receives status "4".
User in status "3" during registration, if the registration has to be confirmed:
The user is called by the monitoring system after about one minute and if the user accepts the call, the user presses the # key for confirmation, whereupon the system ends the call and the user receives status "1" or the user either does not accept the call or does not press the # key, the system ends the call and the registration has not been confirmed by the user, he is removed from the monitoring list and is thus regarded by the system as deregistered.
User in status "4" in a potential emergency, where the user is called by the monitoring system after about one minute and, if the user accepts the call and presses the # key to confirm, after which the system ends the call and the user receives status "1" or, if the user does not accept the call because the connection is engaged, whereupon the system ends the call and the user receives status "2" or the user does not press the # key, the system ends the call and the system registers an emergency with the monitor.

## Revendications

1. Méthode assistée par ordinateur pour supervision et appel d'urgence, pour les personnes utilisant la télécommunication, notamment la téléphonie mobile, dans laquelle le numéro d'abonné de l'usager à superviser et/ou en situation dangereuse est supervisé, **caractérisée en ce que**
a) l'usager appelle au commencement d'une supervision souhaitée un numéro d'abonné fixé au préalable ;
b) le numéro de téléphone transmis de l'usager est comparé avec une liste de numéros de téléphone autorisés gérée dans le système de supervision, et qu'en cas de comparaison réussie ledit numéro est automatiquement enregistré, dans le système de supervision, comme numéro de rappel ;
c) si le numéro de téléphone de l'usager n'a pas été transmis ou n'est pas inscrit dans la liste, l'usager est invité à s'inscrire personnellement sous un autre numéro d'appel de destination, auprès d'un superviseur ;
d) le système de supervision appelle automatiquement le superviseur après écoulement d'une période de temps prédéfinie, et confirme de la sorte à l'usager qu'il s'est bien inscrit dans le système de supervision ;
e) l'usager, en prenant cet appel de confirmation de l'inscription et en tapant en plus un code correspondant, confirme de son côté l'inscription et est donc réputé formellement inscrit dans le système de supervision.
f) le système de supervision appelle automatiquement l'usager selon des périodicités prédéfinies en se servant du numéro de rappel défini automatiquement ou manuellement, sachant que l'usager, par un code défini d'avance, notamment en appuyant sur une/des touche(s), accuse réception de l'appel sur son téléphone ;
g) si l'usager n'accuse pas réception, le système de supervision déclenche automatiquement un plan d'urgence défini d'avance ;
h) le plan d'urgence une fois activé informe, par exemple en appelant des personnes définies d'avance et qui prennent au moins un contact téléphonique avec l'usager par le biais des numéros de rappel mémorisés;
i) si l'usager ne se signale toujours pas, les mesures d'urgence prédéfinies dans le plan d'urgence sont déclenchées sans délai ;
j) en l'absence de cas d'urgence, l'usager se radie au terme de la période de supervision souhaitée - après avoir quitté une zone à risque - en appelant le système de supervision, en utilisant pour ce faire un code fixé d'avance ;
k) le système de supervision efface automatiquement le numéro identifié et supervisé.

2. Méthode selon la revendication 1, **caractérisée en ce que** les modifications suivantes sont utilisées individuellement ou combinées :
a) si le numéro de téléphone de l'usager n'est pas transmis, ou si le numéro transmis n'est pas inscrit dans la liste du système de supervision, ou si l'usager souhaite, malgré l'appel depuis un numéro de téléphone fiable, le rappel sous un autre numéro de téléphone, il peut programmer comme numéro de rappel, par exemple par le biais du clavier de son téléphone, un numéro de téléphone librement composable;
b) lors de l'inscription dans le système de supervision, l'usager peut laisser un message vocal indiquant, suivant l'application, par exemple son lieu de séjour, la nature de son activité ou des consignes sur les actions à accomplir en cas d'urgence éventuelle, sachant que ce message est automatiquement enregistré et mémorisé dans le système de supervision ;
c) si lors de son inscription dans le système l'usager a laissé un message vocal, ce message est automatiquement transmis, en cas d'urgence à la personne et/ou au service à alarmer ;
d) lors de son inscription, l'usager se voit attribuer visuellement et vocalement un code qui l'identifie, sachant qu'il devra taper ce code lors d'autres appels de sa part au système de supervision et/ou lorsque le système de supervision l'appelle d'autres fois, ceci afin d'accuser réception et/ou dans un but d'identification.

3. Méthode selon la revendication 1 ou 2, **caractérisée en ce qu'**un système de supervision d'origine transmet suivant besoins son activité à un autre système de supervision opérant également de façon automatique et lui aussi assisté par ordinateur, ledit système de supervision dernier cité opérant lui aussi conformément au plan de supervision fonctionnant pour le système de supervision normalement compétent, sachant que pendant la transmission du système de supervision d'origine à l'autre système de supervision, les informations suivantes peuvent par exemple être échangées :
a) l'usager à superviser, par transmission des entrées de supervision, sachant que les données, après leur transmission à l'autre système de supervision, sont supprimées de la liste des entrées de supervision figurant dans le système de supervision d'origine ;
b) l'autre système de supervision utilise les données en les insérant dans sa liste d'entrées de supervision ;
c) la liste du système de supervision d'origine est également transmise du système de supervision d'origine à l'autre système de supervision, et mémorisée dans ce dernier affectée d'un identifiant correspondant ;
d) selon la configuration, l'autre système de supervision restitue, à une heure définie ou après que le système de supervision d'origine les lui a demandées, les données correspondantes au système de supervision d'origine respectif, lequel poursuit ensuite sans interruption et automatiquement l'activité de supervision assistée par ordinateur.

4. Méthode selon la revendication 3, **caractérisée en ce qu'**un ou plusieurs systèmes de supervision d'origine peuvent, suivant besoins, communiquer les entrées de supervisions à un ou plusieurs autre(s) système(s) de supervision.

5. Méthode selon la revendication 3 ou 4, **caractérisée en ce qu'**un ou plusieurs système(s) de contrôle est/sont présent(s), indépendant(s) aussi bien du ou des système(s) de supervision d'origine que de l'autre ou des autres système(s) de supervision ; ce(s) système(s) de contrôle
a) supervisent les systèmes de supervision d'origine et/ou d'autres systèmes de supervision, afin de garantir, en cas de défaillance d'un système de supervision d'origine et/ou d'un autre système de supervision, que la sécurité de l'usager demeure assurée ;
b) enregistrent toutes les entrées de supervision des systèmes de supervision d'origine et/ou des autres systèmes de supervision supervisés, de sorte qu'aussi en cas de panne générale d'un système de supervision d'origine ou d'un autre système de supervision les usagers supervisés demeurent identifiables.

6. Méthode selon la revendication 1 ou l'une des revendications suivantes, **caractérisée par** les procédés suivants :
Appel de l'usager : détection automatique du numéro de rappel ;
L'usager appelle le système de supervision, le système de supervision établit la liaison en vérifiant, dans le cas où le numéro de téléphone de l'usager est transmis, si le numéro de téléphone transmis est noté dans l'annuaire du système et si oui, en vérifiant si l'usager est déjà inscrit dans le système, si oui en lui faisant entendre un message "Vous êtes radié maintenant", ce après quoi le système raccroche, l'usager est radié de la liste active de supervision et ainsi radié du système ; ou l'usager appelle le système de supervision, ce dernier établit la liaison et dans le cas où le numéro de téléphone n'est pas transmis ou n'est pas inscrit dans l'annuaire du système après transmission, l'usager entend un message "Veuillez vous inscrire personnellement" et ensuite le système raccroche et l'usager n'est pas automatiquement supervisé par le système de supervision ; ou dans le cas où l'usager après l'appel du système de supervision et après la transmission de son numéro de téléphone et lors de la vérification si son numéro de téléphone a été noté dans l'annuaire du système, il est constaté que ce numéro n'y figure pas, l'usager entend un message "Vous êtes inscrit maintenant", ce après quoi le système raccroche, inscrit l'usager dans la liste active de supervision et lui confère le statut "3" ;
Usager ayant le statut "1" dans une supervision normale :
Au bout d'environ cinq minutes, le système de supervision appelle l'usager et dans le cas où l'usager prend l'appel et appuie sur la touche # pour confirmer, le système raccroche, ce après quoi l'usager reçoit le statut "1" ; ou dans le cas où l'usager ne prend pas l'appel parce que la ligne est occupée, le système raccroche et confère à l'usager le statut "2" ; ou dans le cas où l'usager n'appuie pas sur la touche #, le système raccroche et confère à l'usager le statut "4" ;
Usager ayant le statut "2" en cas de rappel à court terme si la ligne était occupée :
Au bout d'une minute environ, le système de supervision appelle l'usager et dans le cas où l'usager prend l'appel et appuie sur la touche # pour confirmer, le système raccroche et confère à l'usager le statut "1" ; ou l'usager ne prend pas l'appel parce que la ligne est occupée, ce après quoi le système raccroche et confère le statut "2" à l'usager ; ou l'usager n'appuie pas sur la touche #, auquel cas le système raccroche et confère à l'usager le statut "4" ;
Usager ayant le statut "3" lors de l'inscription, dans le cas où il faut confirmer l'inscription :
Au bout d'une minute environ, le système de supervision appelle l'usager et dans le cas où l'usager prend l'appel et appuie sur la touche # pour confirmer, le système raccroche et confère à l'usager le statut "1" ; ou l'usager soit ne prend pas l'appel soit n'appuie pas sur la touche #, auxquels cas le système raccroche et vu que l'inscription de l'usager n'a pas été confirmée, ledit usager est radié de la liste de supervision et donc réputé radié du système ;
Usager ayant reçu le statut "4" et potentiellement en situation d'urgence, sachant que le système de supervision appelle l'usager au bout d'une minute environ et dans le cas où l'usager prend l'appel et appuie sur la touche # pour confirmer, le système raccroche et l'usager reçoit le statut "1" ; ou dans le cas où l'usager ne prend pas l'appel parce que la ligne est occupée, le système raccroche et l'usager reçoit le statut "2" ; ou dans le cas où l'usager n'appuie pas sur la touche #, le système raccroche et signale un cas d'urgence au superviseur.
